# EUROPÄISCHE PATENTSCHRIFT

(11) **EP 3 363 673 B1**
(45) Veröffentlichungstag und Bekanntmachung des Hinweises auf die Patenterteilung: **10.03.2021**
(21) Anmeldenummer: 18152744.1
(22) Anmeldetag: 22.01.2018
(51) Int. Cl.: B60K 35/00, G06F 3/0482

(54) **TECHNIK ZUR VERARBEITUNG IN EINEM FAHRZEUG ANFALLENDER STATUSSIGNALE**
TECHNIQUE FOR PROCESSING STATUS SIGNALS WHICH OCCUR IN A VEHICLE
TECHNIQUE DE TRAITEMENT DES SIGNAUX D'ÉTAT OBTENUS DANS UN VÉHICULE

(30) Priorität: 08.02.2017 DE 102017001142
(43) Veröffentlichungstag der Anmeldung: 22.08.2018
(73) Patentinhaber: MAN Truck & Bus SE, 80995 München (DE)
(72) Erfinder: Güllich, Johannes, 85229 Markt Indersdorf (DE); Ochs, Thomas, 82178 Puchheim (DE); Mohra, Holger, 80805 München (DE); Arnold, Claus, 93161 Sinzing (DE); Zademach, Martin, 85055 Ingolstadt (DE)
(74) Vertreter: v. Bezold & Partner Patentanwälte - PartG mbB

(56) Entgegenhaltungen:
- EP-A1- 2 787 427
- EP-A1- 2 937 771
- WO-A1-2015/169462
- WO-A1-2016/056105
- DE-T5-112013 007 572
- JP-A- 2011 037 310

## Beschreibung

Die vorliegende Erfindung betrifft eine Technik zur Verarbeitung von in einem Fahrzeug, insbesondere einem Nutzfahrzeug, anfallenden Statussignalen. Insbesondere sind eine Vorrichtung zur Verarbeitung solcher Statussignale im Fahrzeug und ein mit einer solchen Vorrichtung ausgestattetes Fahrzeug beschrieben.

PKW-Fahrer, und in besonderem Maße LKW-Fahrer, sind während der Fahrt einer Vielfalt an Signalen ausgesetzt, die in verschiedenen Zusammenhängen von unterschiedlichen Systemen innerhalb und außerhalb des LKWs gesendet werden. Oft handelt es sich dabei um Signale, wie beispielsweise Telefonanrufe oder Staumeldungen, die an den Fahrer herangetragen werden, d. h. deren Abruf nicht durch den Fahrer initiiert wird.

Jedoch darf der Zugang des Fahrers zu solchen Informationen nicht grundsätzlich blockiert sein, da auch während der Fahrt unter diesen Signalen sicherheitsrelevante Informationen sind. Andererseits darf eine akustische oder visuelle Mitteilung dieser Signale nicht die Aufmerksamkeit des Fahrers ablenken. Dazu gehört auch, dass, wenn eine eingehende Information die Aufmerksamkeit des Fahrers erfordert, diese so direkt zugänglich sein muss, dass der Fahrer nicht durch eine Menübedienung an seiner primären Aufgabe gehindert ist.

Das Dokument EP 2 787 427 A1 beschreibt beispielsweise die Menübedienung mittels eines Touchscreens, in dem einem Benutzer Daten durch Drücken oder Ziehen von einer Seite eines in einem Fahrzeug eingebauten Touchscreens oder eines angezeigten Verzeichnisses angezeigt werden.

Das Dokument EP 2 937 771 A1 beschreibt das Einblenden einer Demarkationslinie unterhalb eines Entertainmentbereichs auf einer Anzeigefläche in Reaktion auf eine mit einer Infrarot-LED-Leiste aufgezeichneten 3D-Geste des Anwenders. Der Anwender kann dann mittels einer weiteren Handbewegung die Demarkationslinie verschieben und so die Anzeige von Informationen und Menübedienung unterhalb des Entertainmentbereichs bewirken.

Das Dokument WO 2015/169462 A1 beschreibt das Einblenden einer Schaltfläche in der rechten unteren Ecke einer Anzeige aufgrund einer mit einer Infrarot-LED-Leiste aufgezeichneten 3D-Geste des Anwenders. Der Anwender kann dann mittels einer weiteren Handbewegung zwischen einer ersten Bildschirmansicht mit Navigationsdaten und einer weiteren Bildschirmansicht wechseln

Das Dokument WO 2016/056105 A1 beschreibt ein Anzeigesteuersystem in einem Fahrzeug und umfasst eine Informationserfassungseinheit zum Erfassen von zumindest einer von einer Fahrzeuginformation, einer audio-visuellen Information und einer Navigationsinformation als eine Ereignisbestimmungsinformation, eine Ereignisauftritts-Bestimmungseinheit zum Bestimmen eines Auftretens von einem Ereignis aus der Ereignisbestimmungsinformation, und eine Anzeigesteuereinheit zum Steuern einer Anzeige eines Kombinationsinstruments. Wenn das Ereignis auftritt, zeigt die Anzeigesteuereinheit in dem Kombinationsinstrument ein Bewegungssymbol an, das das Auftreten des Ereignisses angibt, und sich von einem ersten Bereich zu einem zweiten Bereich des Kombinationsinstruments bewegt, sowie einen Bewegungspfad des Bewegungssymbols von dem ersten Bereich zu dem zweiten Bereich.

Das Dokument DE 11 2013 007572 T5 beschreibt eine Informations-Anzeigenvorrichtung und ein -verfahren, bei dem wenn drei Warnungen (eine Bremsabnormalität, eine Ladeabnormalität und eine Öldruckabsenkung) in einem Fahrzeug auftreten, werden ein Bremsabnormalitäts-Icon, ein Ladeabnormalitäts-Icon und ein Öldruckabsenkungs-Icon in einer Icon-Anzeigeregion einer Anzeige angezeigt. Andererseits werden eine Bremsabnormalitäts-Warninformation, eine Ladeabnormalitäts-Warninformation und eine Öldruckabsenkungs-Warninformation in einer Informations-Anzeigeregion in einer umschaltenden Weise jede feste Zeitperiode angezeigt.

Somit ist eine Aufgabe der Erfindung, eine Technik zur Vereinheitlichung und Selektion des Informationsflusses in einem Fahrzeug bereitzustellen. Eine weitere oder alternative Aufgabe der Erfindung ist, einem Fahrer des Fahrzeugs einen einheitlichen und selektiven Zugang zum Informationsstrom im Fahrzeug, insbesondere dem spezifischen Informationsstrom eines Nutzfahrzeugs, zu ermöglichen.

Diese Aufgabe oder Aufgaben werden durch eine Vorrichtung zur Verarbeitung in einem Fahrzeug anfallender Statussignale mit den Merkmalen des Anspruchs 1 gelöst.

Gemäß einem Aspekt umfasst eine Vorrichtung zur Verarbeitung in einem Fahrzeug anfallender Statussignale eine in einem Fahrerhaus des Fahrzeugs angeordnete oder anordenbare Anzeigeeinheit und eine mit der Anzeigeeinheit in Signalaustausch stehende oder bringbare Steuerungseinheit. Die Steuerungseinheit ist dazu ausgebildet, Statussignale im Fahrzeug aus unterschiedlichen Signalquellen zu erfassen, jedes Statussignal einer von mehreren Signalgruppen zuzuordnen, und an der Anzeigeeinheit mindestens einen Hinweis auf die erfassten Statussignale auszugeben, wobei eine Position des Hinweises in einer Anzeigefläche der Anzeigeeinheit von der zugeordneten Signalgruppe abhängt.

Der Hinweis kann die Signalgruppe angeben, beispielsweise durch Anzeigen eines der Signalgruppe zugeordneten Symbols oder Texts. Optional kann neben oder auf dem Symbol eine Anzahl der der Signalgruppe zugeordneten Statussignale unter den erfassten Statussignalen angezeigt sein.

Die Anzeigeeinheit kann an einer Mittelkonsole des Fahrzeugs angeordnet sein. Die Anzeigeeinheit kann eine Sekundäranzeige sein, beispielsweise neben einem Kombinationsinstrument.

Der Hinweis kann in einer Hinweisfläche innerhalb der Anzeigefläche angezeigt werden. Die Ausgabe des Hinweises, insbesondere die Hinweisfläche, kann eine vorherige Ausgabe überdecken. Die Hinweisfläche kann sich von einem Rand der Anzeigefläche in die Anzeigenfläche erstrecken, z. B. senkrecht zum Rand der Anzeigefläche in die Anzeigefläche hinein.

Die von den Signalgruppen abhängigen Positionen können die Ränder und/oder Ecken der Anzeigefläche umfassen. Die Hinweisfläche kann sich von einem der Signalgruppe entsprechenden Rand der Anzeigefläche in die Anzeigenfläche erstrecken. Alternativ oder in Kombination können die von den Signalgruppen abhängigen Positionen mehrere sich parallel zum Rand der Anzeigefläche erstreckende Plätze, beispielsweise innerhalb der Hinweisfläche, umfassen.

Die Positionen können eine thematische Gruppierung und/oder einen thematisch sortierten Zugang zu den Statussignalen ermöglichen.

Die Steuerungseinheit kann ferner dazu ausgebildet sein, die Anzeigeeinheit zwischen einem ersten Zustand und einem zweiten Zustand umzuschalten. Im ersten Zustand kann kein Hinweis angezeigt sein. Im zweiten Zustand kann mindestens ein Hinweis angezeigt sein. Im zweiten Zustand kann nur der Hinweis auf das Statussignal angezeigt sein, z B. der Hinweis und nicht ein weitergehender Inhalt des Statussignals oder eine Zusammenfassung des Statussignals.

Die Steuerungseinheit kann dazu ausgebildet sein, im ersten Zustand nur einen Rand der Hinweisfläche anzuzeigen. Alternativ oder ergänzend kann die Steuerungseinheit dazu ausgebildet sein, beim Übergang vom ersten Zustand in den zweiten Zustand den Rand der Hinweisfläche vom Rand der Anzeigefläche wegzubewegen. Der Rand der Hinweisfläche kann eine Griffleiste umfassen. Die Griffleiste kann im ersten Zustand und im zweiten Zustand angezeigt werden.

Die Steuerungseinheit kann ferner dazu ausgebildet sein, die Anzeigeeinheit in einen dritten oder weitere Zustände umzuschalten. Im dritten Zustand oder einem der weiteren Zustände kann ein Inhalt des Statussignals (z. B. eine Zusammenfassung des Statussignals) in räumlicher Zuordnung zum Hinweis angezeigt sein.

Beim Übergang vom zweiten Zustand in den dritten Zustand (oder einen der weiteren Zustände) kann der Rand der Hinweisfläche weiter wegbewegt werden vom Rand der Anzeigefläche, z. B. senkrecht zum Rand der Anzeigefläche in die Anzeigefläche hinein. Im dritten Zustand (oder einem der weiteren Zustände) kann der Inhalt des Statussignals (z. B. die Zusammenfassung) in der zwischen dem Hinweis und dem Rand der Anzeigefläche frei werdenden Fläche angezeigt sein.

Im ersten, zweiten und dritten Zustand (oder einem der weiteren Zustände) kann der Rand der Hinweisfläche vom Rand der Anzeigefläche um ein erstes, zweites bzw. drittes Maß (oder ggf. weitere Maße) beabstandet sein. Das erste Maß kann kleiner als das zweite Maß sein. Das zweite Maß kann kleiner als das dritte Maß sein. Ggf. kann das dritte Maß kleiner sein als das weitere Maß, etc.

Die Steuerungseinheit kann dazu ausgebildet sein, einen Betriebszustand des Fahrzeugs und/oder eine Fahrsituation des Fahrzeugs zu erfassen. Die Signalgruppen der Statussignale, die Zuordnung der Statussignale zu den Signalgruppen, die von der jeweiligen Signalgruppe abhängigen Positionen der Hinweise, der Zustand der Anzeigeeinheit und/oder die Änderung des Zustands beim Erfassen des Statussignals können vom Betriebszustand des Fahrzeugs und/oder der Fahrsituation des Fahrzeugs abhängig sein. Die Fahrsituation oder der Betriebszustand kann eine Verkehrsdichte, eine Fahrbahnkrümmung, eine Fahrbahnneigung, einen Lenkwinkel und/oder eine Lenkaktivität umfassen. Der Betriebszustand des Fahrzeugs kann durch eine Phase des Betriebs des Fahrzeugs bestimmt sein.

Die Steuerungseinheit kann dazu ausgebildet sein, den Zustand der Anzeigeeinheit in Reaktion auf das erfasste Statussignal zu ändern. Die Änderung des Zustands der Anzeigeeinheit kann von einer dem Statussignal zugeordneten Priorität oder der dem Statussignal zugeordneten Signalgruppe abhängen. Die den Statussignalen zugeordneten Prioritäten können in verschiedenen Phasen des Betriebs des Fahrzeugs verschieden sein.

Die Signalquellen können fahrzeugexterne und fahrzeuginterne Signalquellen umfassen. Die anfallenden Statussignale können durch das Fahrzeug oder von außerhalb des Fahrzeugs veranlasst sein. Die anfallenden Statussignale können am Fahrzeug eingehende Statussignale sein. Der Eingang, beispielsweise ein Funkempfang, des Statussignals kann das Erfassen bewirken, mit diesem zusammenfallen und/oder das Anzeigen des entsprechenden Hinweises bewirken.

Die Statussignale können einen Status oder eine Änderung des Status angeben. Der Status oder die Statusänderung kann eine Komponente des Fahrzeugs, eine Fahrroute des Fahrzeugs, eine Wettervorhersage, einen Telefonanruf, eine E-Mail oder eine Textnachricht betreffen.

Zumindest einer der Signalgruppen können Statussignale aus unterschiedlichen Signalquellen zugeordnet sein. Die unterschiedlichen Signalquellen können die Statussignale über unabhängige Signalpfade bereitstellen, beispielsweise innerhalb einer Signalgruppe. Die Signalgruppen können eine Signalgruppe für örtliche Verkehrsregeln umfassen, beispielsweise für eine Obergrenze der Fahrgeschwindigkeit. Eines der Statussignale kann eine örtliche Verkehrsregel betreffen. Durch eine Frontkamera des Fahrzeugs erfasste Verkehrsschilder und aus im Fahrzeug gespeicherten Kartendaten ausgelesene Verkehrsregeln sind Beispiele zweier Statussignale aus unterschiedlichen Signalquellen, die derselben Signalgruppe zugeordnet sein können.

Die Steuerungseinheit kann dazu ausgebildet sein, fahrzeugexterne Statussignale über optische Signale und/oder Funksignale zu erfassen. Die Statussignale können Funksignale eines Radiodatensystems (RDS), eines tonfrequenten Funkmeldesystems (FMS) und/oder eines Mobilfunksystems umfassen.

Die Steuerungseinheit kann dazu ausgebildet sein, fahrzeuginterne Statussignale über ein Bussystem des Fahrzeugs zu erfassen. Das Bussystem kann einen seriellen Bus eines sogenannten Controller Area Network (CAN) umfassen.

Die Vorrichtung kann ferner eine mit der Steuerungseinheit in Signalaustausch stehende Eingabeeinheit umfassen. Die Eingabeeinheit kann dazu ausgebildet sein, den Zustand der Anzeigeeinheit manuell zu ändern. Die Eingabeeinheit kann einen Taster und/oder einen Drehsteller umfassen. Alternativ oder ergänzend kann die Eingabeeinheit in Verbindung mit der Anzeigeeinheit einen berührungsempfindlichen Bildschirm umfassen.

Eine erste Betätigung der Eingabeeinheit, beispielsweise eine Bewegung senkrecht zum Rand der Hinweisfläche oder der Griffleiste, kann eine entsprechende Bewegung der Hinweisfläche und/oder eine entsprechende Änderung des Zustands der Anzeigeeinheit bewirken. Alternativ oder ergänzend kann eine zweite Betätigung der Eingabeeinheit, beispielsweise ein Drücken im zweiten Zustand, einen Übergang in den dritten Zustand und die Anzeige des Inhalts des Statussignals bewirken, dessen Hinweis beim Drücken im zweiten Zustand angezeigt ist.

Das Fahrzeug kann ein Landfahrzeug, insbesondere ein Nutzfahrzeug (beispielsweise ein Lastkraftwagen zur Güterbeförderung und/oder ein Bus zur Personenbeförderung) oder ein Personenkraftwagen sein. Im Fall eines Personenkraftwagens kann das Fahrerhaus dem Innenraum, insbesondere dem Fahrerplatz, entsprechen.

Die erfindungsgemäße Verarbeitung der im Fahrzeug anfallenden Statussignale kann in besonderem Maße bei einem Nutzfahrzeug für die Verkehrssicherheit relevant sein, beispielsweise da der Fahrer des Nutzfahrzeugs zur Ausübung seiner beruflichen Tätigkeit nicht sämtliche anfallenden Statussignal ignorieren kann. Ausführungsbeispiele der Vorrichtung können durch die zugeordneten Prioritäten einen selektiven Zugang zu den für die Verkehrssicherheit relevanten Statussignalen ermöglichen.

Gemäß weiteren Aspekten sind ein Kraftfahrzeug, insbesondere ein Nutzfahrzeug und beispielsweise ein Lastkraftwagen, mit einer solchen Vorrichtung und ein Verfahren zur Herstellung eines Fahrzeugs mit dem Einbau einer solchen Vorrichtung bereitgestellt. Das Nutzfahrzeug kann ein Fahrerhaus und eine Vorrichtung mit einer Anzeigeeinheit und einer Steuerungseinheit gemäß dem Vorrichtungsaspekt umfassen.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: eine schematische Darstellung eines Nutzfahrzeugs mit einer Vorrichtung zur Verarbeitung in dem Nutzfahrzeug anfallender Statussignale im Umfeld mehrerer beispielhafter Signalquellen;
- Figur 2: eine schematische Zuordnung von Signalen zu Signalgruppen für ein Ausführungsbeispiel der Vorrichtung der Figur 1;
- Figur 3: eine schematische Darstellung zur Anzeige eines Hinweises gemäß einem ersten Ausführungsbeispiel der Vorrichtung der Figur 1;
- Figur 4: eine schematische Darstellung von Positionen und Zuständen zur Anzeige des Hinweises gemäß einem zweiten Ausführungsbeispiel der Vorrichtung der Figur 1;
- Figuren 5A und 5B: schematische Darstellungen eines Zustandsübergangs gemäß einem dritten Ausführungsbeispiel der Vorrichtung der Figur 1; und
- Figuren 6A und 6B: schematische Darstellungen eines Zustandsübergangs gemäß einem vierten Ausführungsbeispiel der Vorrichtung der Figur 1.

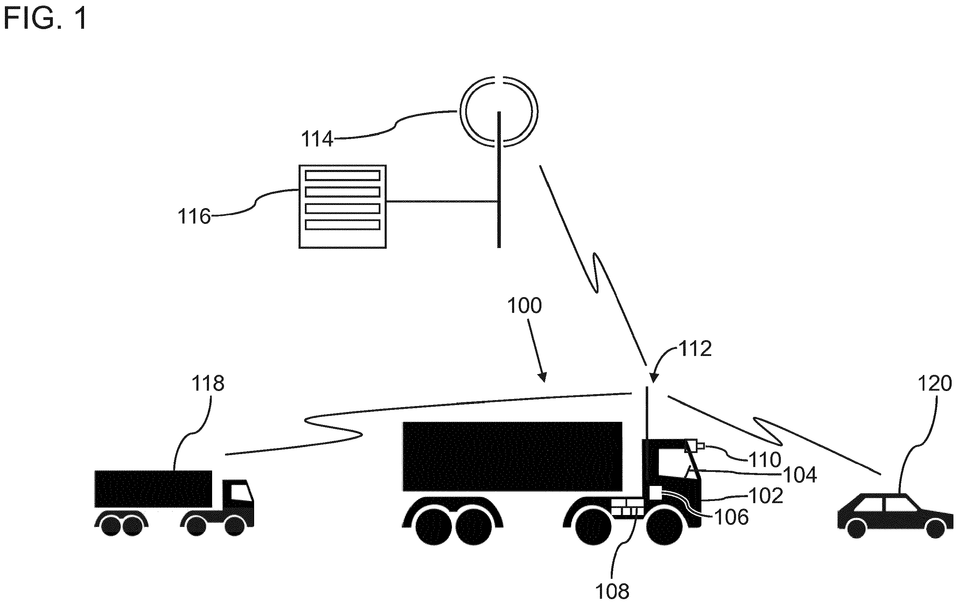

Figur 1 zeigt in einer schematischen Darstellung ein allgemein mit Bezugszeichen 100 bezeichnetes Fahrzeug, insbesondere ein Nutzfahrzeug, mit einer Vorrichtung zur Verarbeitung in dem Nutzfahrzeug 100 anfallender Statussignale. Die Vorrichtung umfasst eine in einem Fahrerhaus 102 des Nutzfahrzeugs 100 angeordnete Anzeigeeinheit 104 und eine mit der Anzeigeeinheit 104 in Signalaustausch stehende Steuerungseinheit 106. Die Steuerungseinheit 106 ist dazu ausgebildet, Statussignale im Nutzfahrzeug 100 aus unterschiedlichen Signalquellen zu erfassen, jedes Statussignal einer von mehreren Signalgruppen zuzuordnen, und an der Anzeigeeinheit 104 mindestens einen Hinweis auf die erfassten Statussignale auszugeben. Eine Position des Hinweises in einer Anzeigefläche der Anzeigeeinheit 104 ist von der zugeordneten Signalgruppe abhängig.

Figur 1 zeigt ferner Beispiele der Signalquellen bzw. deren Signalpfade zur Steuerungseinheit 106. Die Statussignale treffen über verschiedene Medien bei der Steuerungseinheit 106 ein. Statussignale aus fahrzeuginternen Signalquellen können beispielsweise über einen seriellen Bus 108, insbesondere einen CAN-Bus, des Nutzfahrzeugs 100 erfasst werden. Beispielsweise wird über den CAN-Bus 108 mittels Sensoren einer elektronischen Fahrdynamikregelung festgestellt, ob eine Straße vereist ist.

Fahrzeugexterne Statussignale, beispielsweise eine Beschilderung, können über eine Frontkamera 110 am Fahrerhaus 102 erfasst werden. Alternativ oder ergänzend können Funksignale über eine Funkschnittstelle 112 am Fahrerhaus 102 erfasst werden. Zu den fahrzeugexternen Statussignalen gehören konventionelle Statusinformationen, wie beispielsweise Uhrzeit und Datum. Zu den fahrzeugexternen Signalquellen gehört ein Mobilfunknetz 114, dessen Statussignale Telefonanrufe und Kurznachrichten umfassen. Ferner vermittelt das Mobilfunknetz 114 Datendienste, beispielsweise eine Verkehrstelematik. Die Datendienste können von einem Server 116 über das Mobilfunknetz 114 Statussignale an das Nutzfahrzeug 100 bzw. dessen Steuerungseinheit 106 senden.

Zu den Datendiensten gehören beispielsweise Routenvorgaben oder Routenänderungen zur Steuerung einer Fahrzeugflotte mit mehreren Nutzfahrzeugen 100. Alternativ oder ergänzend umfassen die Datendienste Statussignale zu Verkehrsvorhersagen, Staumeldungen oder Wettervorhersagen. Ferner können über dieselbe Funkschnittstelle 112, oder eine spezifische Funkschnittstelle für Fahrzeug-zu-Fahrzeug-Kommunikation, Statussignale zwischen Fahrzeugen 118 und 100 derselben Fahrzeugflotte (beispielsweise Taxis oder Nutzfahrzeuge) ausgetauscht werden. Ferner sind Verkehrsteilnehmer 120 in der Umgebung des Nutzfahrzeugs 100 Beispiele für externe Signalquellen, insbesondere für Verkehrsflussmeldungen.

Durch die Ausgabe des Hinweises kann der Informationsfluss zum Fahrer gesteuert werden. Beispielsweise kann nur für eine Teilmenge der erfassten Statussignale, beispielsweise abhängig von Priorität oder Signalgruppe des Statussignals, ein Hinweis ausgegeben werden. Beispielsweise wird in einem Hinweis-Zustand der Anzeigeeinheit 104 nur der Hinweis auf das erfasste Statussignal in Reaktion auf das Eintreffen des Statussignals am Nutzfahrzeug 100 angezeigt, optional verbunden mit einem akustischen Hinweis.

Durch die Zuordnung der erfassten Statussignale zu Signalgruppen werden die Statussignale gebündelt organisiert und, beispielsweise nach Relevanz, vorsortiert. Dadurch werden die Hinweise auf die erfassten Statussignale thematisch oder nach Priorität strukturiert. Insbesondere werden die Statussignale aus unterschiedlichen Signalquellen an einer Anzeigefläche zentral, und nicht nach Signalquellen getrennt, angezeigt. Optional kann der Fahrer auf Grundlage der angezeigten Hinweise direkt auf die vorsortierten Statussignale zugreifen, ohne den Umweg über tiefere Menüstrukturen gehen zu müssen.

Vorzugsweise umfasst die Vorrichtung ferner eine Eingabeeinheit. Eine einfache Betätigung der Eingabeeinheit im Hinweis-Zustand der Anzeigeeinheit 104, bewirkt, dass in einem Inhalt-Zustand der Anzeigeeinheit 104 ein Inhalt des Statussignals zusätzlich neben dem Hinweis zum nämlichen Statussignal angezeigt wird. Somit werden eine strukturierte Organisation und ein einheitlicher Zugriff auf die Inhalte der anfallenden Statussignale unabhängig von den eingesetzten Kommunikationsmedien dem Fahrer ermöglicht.

Alternativ oder ergänzend ermöglicht die Zuordnung der erfassten Statussignale zu Signalgruppen eine automatische qualitative Vorauswahl (beispielsweise nach Wertigkeit) relevanter Inhalte. Eine thematische Vermischung beispielsweise in herkömmlichen Symbolleisten, die aktuell relevante Informationen oder sicherheitsrelevante Informationen mit irrelevanten Informationen vermengt, wird vermieden.

Durch die Zuordnung zu Signalgruppen wird eine zusammenfassende und mittels der Anzeigefläche zentrale Anzeige der aus unterschiedlichen Signalquellen am Nutzfahrzeug anfallenden Statussignale erreicht. Der Fahrer muss nicht über verschiedene Benutzerschnittstellen, an verschiedenen Stellen eines Infotainment-Systems oder durch Suchen in verschiedenen Untermenüs des Infotainment-Systems mühsam und unter Zeitverlust das anfallende Statussignal auffinden. Insbesondere wird so der Fahrer nicht durch das Eintreffen unterschiedlichster Signale aus verschiedenen Quellen bei der Fahrt abgelenkt.

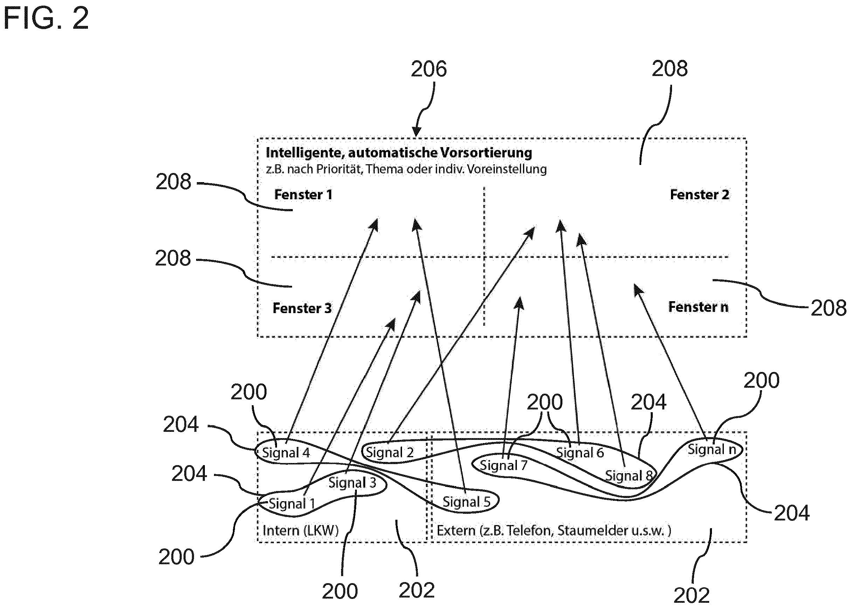

Figur 2 zeigt schematisch eine beispielhafte Zuordnung der am Nutzfahrzeug 100 anfallenden Statussignale 200 zu Signalgruppen 204. Die Signalquellen 202 umfassen interne und externe Signalquellen. Die Zuordnung der Signale 200 zu den Signalgruppen 204 erfolgt über die Grenzen einzelner Signalquellen 202 hinweg. Die Signalgruppe bestimmt eine Position 208 in der Anzeigefläche 206, an welcher der Hinweis auf das jeweilige Statussignal 200 und/oder dessen Inhalt angezeigt wird.

Die Zuordnung kann sämtliche Statussignale 200 umfassen, die an den Fahrer gerichtet sind und deren Anzeige oder Suche nicht vom Fahrer selbst initiiert ist. Die Anzeigefläche 206 kann in einem Mitteilungszentrum (beispielsweise im Infotainment-System oder einem Sekundärdisplay) des Nutzfahrzeugs, beispielsweise in der Mittelkonsole, angeordnet sein.

Die Zuordnung zu den Signalgruppen 204 erfolgt nach inhaltlichen und/oder qualitativen Kriterien. Zu den inhaltlichen Kriterien können Titel oder Textbestandteile des Statussignals 200 analysiert werden. Eine inhaltliche Differenzierung des zugrundeliegenden Statussignals 200 kann durch Überschriften oder grafische Symbole im Hinweis auf das jeweilige Statussignal implementiert sein.

Qualitative Unterschiede der Statussignale können durch hierarchisch geschachtelte Anzeigeformen dargestellt sein. Statussignale 200 mit höchster Priorität werden dem Fahrer automatisch, beispielsweise von einem der vier Ränder oder Seiten der Anzeigefläche aus, angezeigt. Dabei kann, abhängig von dessen Priorität oder Signalgruppe, das Statussignal im Hinweis-Zustand der Anzeigeeinheit 104 oder im Inhalt-Zustand der Anzeigeeinheit 104 angezeigt werden.

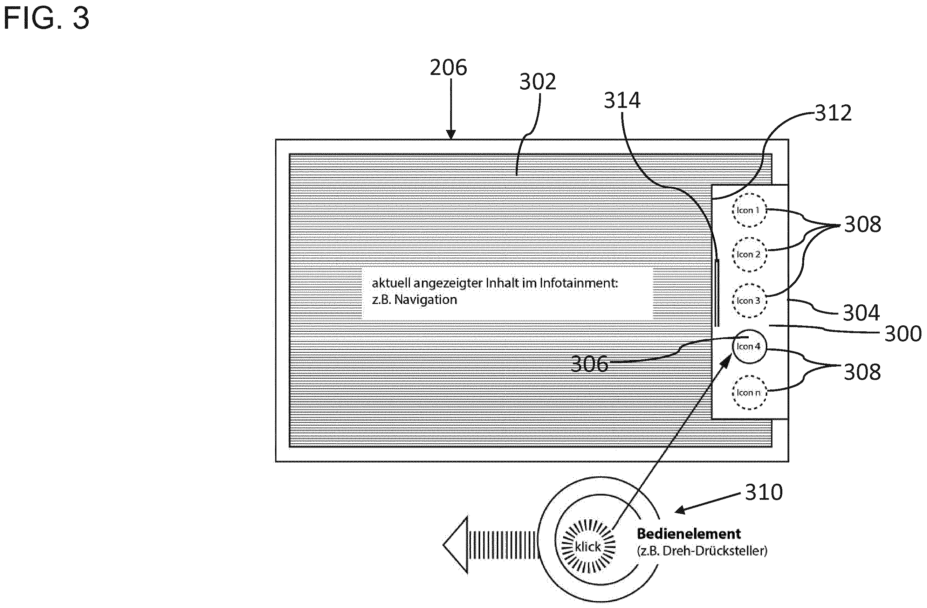

Figur 3 zeigt schematisch ein erstes Ausführungsbeispiel, bei dem eine Hinweisfläche 300 den bestehenden Anzeigeinhalt als Hintergrund 302 überlagert in Reaktion auf das Erfassen eines Statussignals 200, auf welches der Hinweis 306 verweist.

Im in Figur 3 gezeigten ersten Ausführungsbeispiel sind mehrere sich parallel zum Rand 304 der Anzeigefläche 206 erstreckende Plätze 308 als Beispiel für die Positionen 208 gezeigt. Beispielsweise sind den verschiedenen Plätzen 308 verschiedene Signalgruppen 204 zugeordnet.

Durch die Eingabeeinheit 310, beispielsweise einen Dreh-Drück-Steller, ist einer der Plätze 308 auswählbar (beispielsweise durch Drehbewegung). Beim Eintreffen des dem Hinweis 306 zugrundeliegenden Statussignals 200 wird der entsprechende Platz des Hinweises 306 vorausgewählt, so dass durch eine einzige Betätigung (beispielsweise ein Drücken) der Eingabeeinheit 310 ein Inhalt des zugrundliegenden Statussignals 200 in räumlicher Zuordnung zum Hinweis 306 angezeigt wird.

Beispielsweise wird die Hinweisfläche 300 in einem geschlossenen Zustand nur mit dem zur Mitte der Anzeigefläche 206 nächsten Rand 312 neben dem Rand 304 der Anzeigefläche 206 (d. h. ohne die Plätze 308 für Hinweise 306) angezeigt. Vorzugsweise umfasst der Rand 312 eine Griffleiste 314, die die Betätigungsmöglichkeit zu einem Verschieben der Hinweisfläche 300 in Richtung der Mitte der Anzeigefläche 206 indiziert.

Übergänge zwischen dem geschlossene Zustand, dem Hinweis-Zustand und dem Inhalt-Zustand können durch eine laterale Bewegung der Hinweisfläche 300 mit einem ersten, zweiten bzw. dritten Zustand (oder ggf. weiteren Zuständen) realisiert sein.

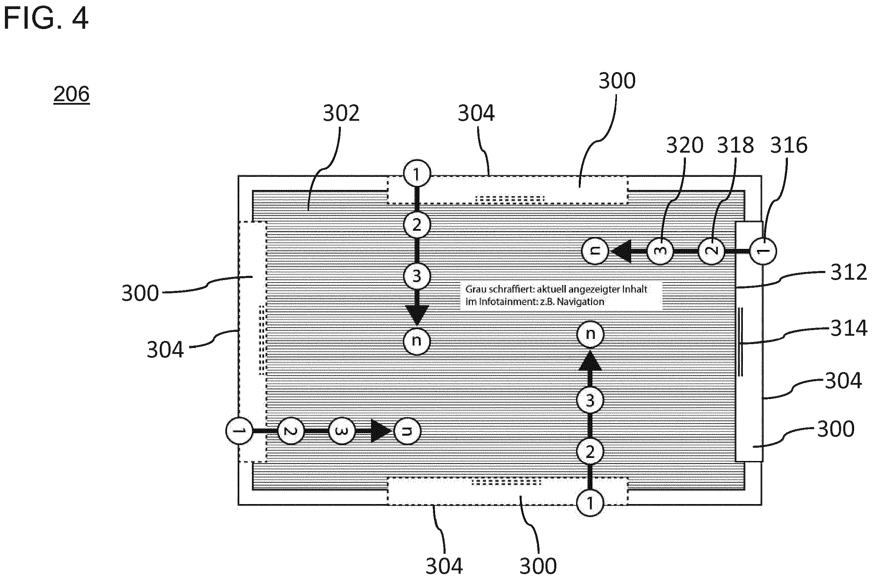

Figur 4 zeigt schematisch eine Abfolge eines ersten Zustands 316 der Anzeigeeinheit 104, bei dem die Hinweisfläche 300 nur den Rand 312, und gegebenenfalls die Griffleiste 314, in der Anzeigefläche 206 anzeigt. In einem zweiten Zustand 318 ist die Hinweisfläche 300 soweit in Richtung der Mitte der Anzeigefläche 206 verschoben, dass die Plätze 308 für die Hinweise 306 angezeigt sind. In einem dritten Zustand 320 (oder optional weiteren Zwischenzuständen) ist die Hinweisfläche 300 weiter zur Mitte der Anzeigefläche 206 angeordnet, so dass zwischen dem Rand 304 der Anzeigefläche 206 und den Plätzen 308 innerhalb der Hinweisfläche 300 der Inhalt des dem jeweiligen Hinweis 306 zugrundeliegenden Statussignals 200 angezeigt wird.

Bei einem Erfassen eines jeden Statussignals 200 kann diesem eine Priorität zugeordnet werden. Die zugeordnete Priorität bestimmt den durch die Steuerungseinheit 106 (unabhängig von einer Eingabe an der Eingabeeinheit 310) bewirkten Zustand 316, 318 oder 320. Signale mit höchster Priorität werden dem Fahrer automatisch im dritten Zustand 320 einschließlich des Inhalts der Statussignale 200 angezeigt. Im dritten Zustand 320 bedeckt die Hinweisfläche 300 einen möglichen Infotainment-Inhalt im Hintergrund 302 teilweise und stellt die Information des zugrundeliegenden Statussignals 200 zusammenfassend dar.

Signale mit untergeordneter Priorität werden in der Anzeigefläche 206 im zweiten Zustand 318 ins Blickfeld des Fahrers geschoben. Dazu ist die Hinweisfläche 300 beispielsweise zu 20% gegenüber der Fläche im dritten Zustand 320 in der Anzeigefläche 206 angezeigt. An den Plätzen 308 sind den jeweiligen Signalgruppen 204 entsprechende Symbole angeordnet, wobei eine größere Farbsättigung und/oder größere Helligkeit eines der Symbole den Hinweis 306 auf das erfasste Statussignal 200 implementiert. Durch die Betätigung der Eingabeeinheit 310 bewirkt die Steuerungseinheit 106 den Übergang vom zweiten Zustand 318 zum dritten Zustand 320, in dem der Fahrer zusammenfassende Informationen zum Statussignal 200 erhält.

Tiefergehende Informationen sind über einen Verweis (der auch als "Link" bezeichnet wird) abrufbar. Vorzugsweise führt erst die Betätigung der Eingabeeinheit 310 im dritten Zustand 320 zur jeweiligen Menüstruktur, so dass Menüstrukturen für Statussignale 200 mit hinreichender Priorität vermieden werden.

Werden keine Statussignale 200 erfasst, sind alle Hinweise 306 zu erfassten Statussignalen 200 durch die Betätigung der Eingabeeinheit 310 abgerufen worden, oder sind nur Statussignale 200 mit einer geringen Priorität erfasst, die keine über den ersten Zustand 316 hinausgehende Änderung des Zustands der Anzeigefläche 206 bewirkt, kann der Fahrer ausgehend vom ersten Zustand 316 (also dem geschlossenen Zustand) der Anzeigefläche 206 durch "Aufziehen" der am Rand 312 angeordneten Griffleiste 314 den zweiten Zustand 318 oder den dritten Zustand 320 bewirken. Alternativ oder ergänzend zu einer neben der Anzeigeeinheit 104 angeordneten Eingabeeinheit 310 können Anzeigeeinheit 104 und Eingabeeinheit 310 in räumlicher Koinzidenz durch einen berührungsempfindlichen Bildschirm implementiert sein.

Die den Statussignalen 200 zugeordnete Priorität und/oder die zugeordnete Signalgruppe 204 kann vom Fahrer abhängen. Beispielsweise erfasst die Steuerungseinheit 106 bei Fahrtantritt den Fahrer für eine personalisierte Zuordnung der Statussignale 200. Wird kein Fahrer erfasst, verwendet die Steuerungseinheit 106 eine voreingestellte Zuordnung.

Wie im zweiten Ausführungsbeispiel der Figur 4 gezeigt, kann die durch die Signalgruppe 204 bestimmte Position 208 unterschiedliche Ränder 304 der Anzeigefläche 206 umfassen. Beispielsweise können jedem der vier Ränder 304 jeweils eine Signalgruppe 204 (oder disjunkte Teilmengen der Signalgruppen 204) zugeordnet sein. Vorzugsweise sind die Plätze 308 innerhalb der Hinweisfläche 300 an jedem der Ränder 304 Untergruppen der Signalgruppen 204 (oder einer Signalgruppe 204 innerhalb der jeweiligen Teilmenge) zugeordnet.

Die den Zustand 316, 318 oder 320 der jeweiligen Hinweisfläche 300 bestimmende Priorisierung der erfassten Statussignale 200 kann von einem Betriebszustand des Nutzfahrzeugs 100 und/oder einer Fahrsituation (beispielsweise einer Verkehrsdichte und/oder einem Straßenverlauf) abhängig sein. Beispielsweise werden während der Fahrt andere Statussignale 200 priorisiert als im Stand des Nutzfahrzeugs 100.

Kommt beispielsweise ein Anruf an, dann wird dies dem Fahrer als priorisierte Meldung signalisiert, d. h., die Steuerungseinheit 106 bewirkt im dritten Zustand 320 der Hinweisfläche 300, dass zusammenfassend die wichtigsten Daten zu diesem Anruf angezeigt werden. Optional ist ein Zugriff in ein vollständiges Telefon-Menü über einen Verweis ermöglicht. Eine E-Mail oder Textnachricht (beispielsweise ein sogenannter "Short Message Service" oder SMS) ist ein Statussignal 200 mit untergeordneter Priorität. Ein solches Statussignal 200 wird im zweiten Zustand 318 nur durch die Hervorhebung eines entsprechenden SMS-Symbols (als Implementierung des Hinweises 306) in der sich teilweise öffnenden Hinweisfläche 300 angezeigt. Der Fahrer hat in diesem zweiten Zustand 318 die Möglichkeit, auf die zusammenfassenden SMS-Daten des zugrundeliegenden Statussignals 200 zuzugreifen, indem die Eingabeeinheit 310 betätigt wird. Beispielsweise wird der Dreh-Drück-Steller lateral bewegt in die Richtung der Bewegung der Hinweisfläche beim Übergang vom zweiten Zustand 318 in den dritten Zustand 320. Die Betätigung kann entweder den Übergang vom zweiten Zustand 318 zum dritten Zustand 320 bewirken oder direkt zu einem SMS-Menü führen. Ist kein weiteres Statussignal erfasst, geht die Anzeigefläche 206 in den ersten Zustand 316 zurück (d. h., die Hinweisfläche 300 wird bis auf die Griffleiste 314 geschlossen).

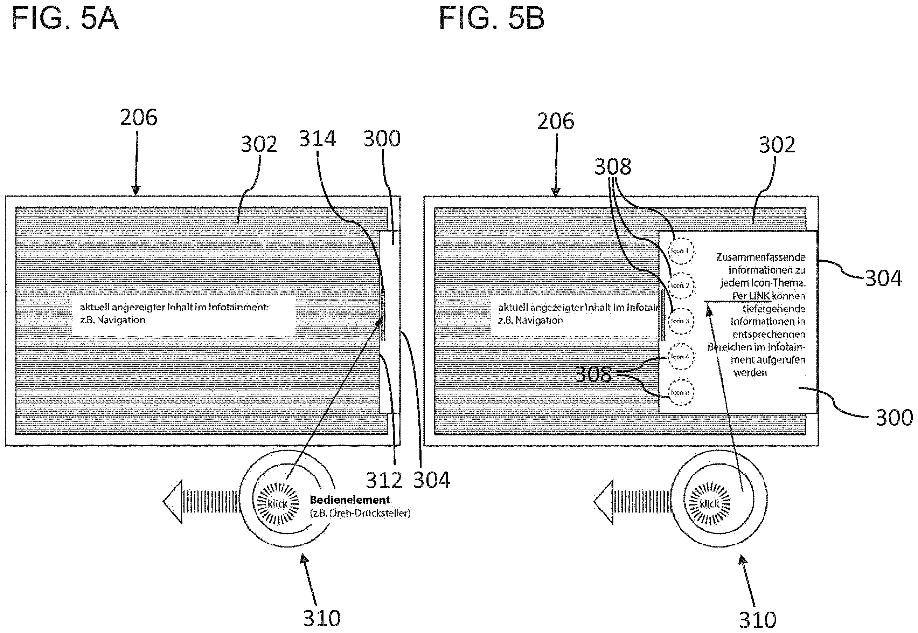

Figur 5A zeigt den ersten Zustand 316 der Anzeigefläche 206 in einem dritten Ausführungsbeispiel der Vorrichtung, das mit jedem vorgenannten Ausführungsbeispiel kompatibel ist. Im ersten Zustand 316 ist die Hinweisfläche 300 bis auf die Griffleiste 314 geschlossen. Durch Betätigung der Eingabeeinheit 310 (beispielsweise das Drücken des Dreh-Drück-Stellers oder durch eine horizontale Bewegung am berührungsempfindlichen Bildschirm ausgehend vom Rand 312 der Hinweisfläche 300 hin zur Mitte der Anzeigefläche 206) wird der Übergang zum in Figur 5B gezeigten dritten Zustand 320 bewirkt. Im dritten Zustand ist in der Hinweisfläche zwischen den Plätzen 308 zur Anzeige des Hinweises 306 und dem Rand 304 der Anzeigefläche 206 ein zusammenfassender Inhalt des zugrundeliegenden Statussignals 200 angezeigt. Dabei überdeckt die Hinweisfläche 300 zumindest teilweise den im Hintergrund 302 angezeigten vorherigen Inhalt, beispielsweise Navigationsdaten. Beispielsweise wird, wie in Figur 5B schematisch dargestellt, in der Hinweisfläche 300 der Inhalt einer Textnachricht als Beispiel eines Statussignals 200 dargestellt. Ein optional darin enthaltener Verweis führt zur Anzeige von tiefergehender Information oder einem für die Signalgruppe 204 spezifischen Menü. Der Verweis ermöglicht eine Schnittstelle zu einem herkömmlichen Infotainment-System. Falls im im dritten Zustand 320 angezeigten Inhalt mehrere Verweise vorhanden sind, wird jeweils ein Verweis mittels der Eingabeeinheit 310 ausgewählt (beispielsweise durch eine Drehbewegung des Dreh-Drück-Stellers) und ausgewählt (beispielsweise durch Drücken des Dreh-Drück-Stellers).

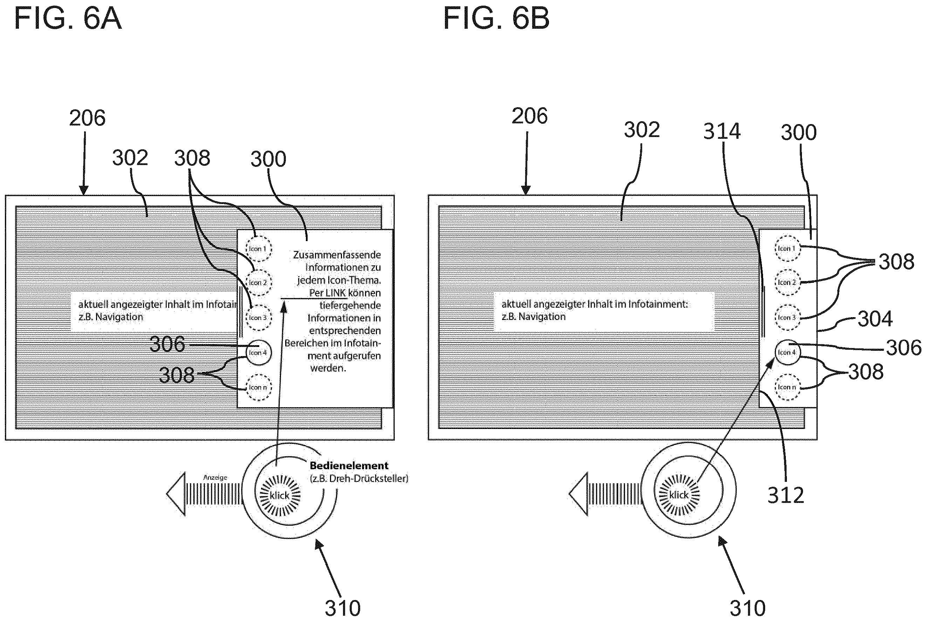

Figur 6A zeigt schematisch die Anzeigefläche 206 im dritten Zustand 320 in Reaktion auf das Erfassen eines Statussignals 200 mit hoher Priorität. Wird ein neues Statussignal 200 mit hoher Priorität (beispielsweise weil der zugeordneten Signalgruppe 204 eine hohe Priorität entspricht) erfasst, öffnet sich die Hinweisfläche 300 ausgehend vom ersten Zustand 316 in den dritten Zustand 320. Dieser Übergang vom ersten Zustand in den vollständig geöffneten dritten Zustand erfolgt ohne Betätigung an der Eingabeeinheit 310. Ein gegebenenfalls im in der Hinweisfläche 300 angezeigten Inhalt enthaltener Verweis auf tiefergehende Information und/oder ein signalgruppenspezifisches Untermenü wird von der Steuerungseinheit 106 in Reaktion auf die Betätigung der Eingabeeinheit 310 ausgeführt.

Nach erfolgter Anzeige des Inhalts des zugrundeliegenden Statussignals 200 und/oder durch Betätigung der Eingabeeinheit 310 bewirkt die Steuerungseinheit 106 den Übergang vom dritten Zustand 320 in den zweiten Zustand 318, falls noch mindestens ein weiterer Hinweis 306 zu einem noch nicht inhaltlich im dritten Zustand 320 angezeigten weiteren Statussignal 200 erfasst ist. Ein vollständiges Schließen der Hinweisfläche 300 gemäß dem ersten Zustand 316 wird erst ausgeführt, falls alle erfassten Statussignale (gegebenenfalls mit hinreichender Priorität) angezeigt worden sind.

Wie aus vorstehender Beschreibung exemplarischer Ausführungsbeispiele ersichtlich, ermöglichen die Ausführungsbeispiele, Statussignale, die über verschiedene Medien (beispielsweise Telefon, Staumelder, Radio, Telematik, etc.) beim Nutzfahrzeug eintreffen, in strukturierter und gebündelter Form einheitlich anzuzeigen. Die Anzeige kombiniert interne und externe Statussignale in einer Struktur.

Ausgehend von einer Vorsortierung aufgrund der Signalgruppen ist es dem Fahrer je nach Bedarf jederzeit ermöglicht, auf tiefergehende Informationen (beispielsweise in den jeweiligen Menübereichen eines Infotainment-Systems) zuzugreifen.

Bei der Fahrt wird der Fahrer weniger abgelenkt aufgrund der Vorsortierung der Statussignale mittels der Signalgruppenzuordnung und/oder der selektiven Intensität der Anzeige, insbesondere nach Relevanz, direkt beim Eintreffen des Statussignals.

Der Fahrer kann die in den Statussignalen enthaltene Information zu einem geeigneten Zeitpunkt mit einer oder wenigen Betätigungen abrufen. Insbesondere wird der angezeigte Informationsumfang nach Betriebszustand und Fahrsituation priorisiert, ohne dass der Fahrer zu einer direkten Informationsaufnahme zum Zeitpunkt des Eintreffens des Statussignals gezwungen ist. Dadurch wird der Fahrer weniger von seiner primären Aufgabe abgelenkt, ohne dass sicherheitsrelevante Information vorenthalten wird.

Der Fahrer kann aufgrund der zusammenfassenden und/oder abgestuften Anzeige der zu den erfassten Statussignalen gehörenden Daten das Maß der Informationstiefe selbst bestimmen. Insbesondere ist der Fahrer dadurch mit dem Inhalt des jeweiligen Statussignals und der gebotenen Informationstiefe befasst und muss sich nicht mit einer Navigation in unübersichtlichen Menüstrukturen aufhalten.

Die Bündelung der Anzeige der Statussignale in einer Anzeigefläche ermöglicht eine ständige Sichtbarkeit der relevanten Statussignale und verringert die Gefahr, wichtige Statussignale zu übersehen, zur Fehlervermeidung. Zudem reduziert die zentrale und einheitliche Anzeige der Statussignale die visuelle und manuelle Interaktion mit dem Fahrer.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder einen bestimmten Signalweg an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Fahrzeug
- 102: Fahrerhaus
- 104: Anzeigeeinheit
- 106: Steuerungseinheit
- 108: Serieller Bus
- 110: Frontkamera
- 112: Funkschnittstelle
- 114: Mobilfunknetz
- 116: Server
- 118: Weiteres Fahrzeug einer Fahrzeugflotte
- 120: Verkehrsteilnehmer
- 200: Statussignal
- 202: Signalquelle
- 204: Signalgruppe
- 206: Anzeigefläche
- 208: Position
- 300: Hinweisfläche
- 302: Hintergrund
- 304: Rand der Anzeigefläche
- 306: Hinweis
- 308: Plätze innerhalb der Hinweisfläche
- 310: Eingabeeinheit
- 312: Rand der Hinweisfläche
- 314: Griffleiste der Hinweisfläche
- 316: Erster Zustand der Anzeigeeinheit
- 318: Zweiter Zustand der Anzeigeeinheit
- 320: Dritter Zustand der Anzeigeeinheit

## Patentansprüche

1. Vorrichtung zur Verarbeitung in einem Fahrzeug (100) anfallender Statussignale (200), umfassend:
eine in einem Fahrerhaus (102) des Fahrzeugs (100) angeordnete oder anordenbare Anzeigeeinheit (104); eine mit der Anzeigeeinheit (104) in Signalaustausch stehende oder bringbare Steuerungseinheit (106), die dazu ausgebildet ist, Statussignale (200) im Fahrzeug (100) aus unterschiedlichen Signalquellen (202) zu erfassen, jedes Statussignal (200) einer von mehreren Signalgruppen (204) zuzuordnen, und an der Anzeigeeinheit (104) mindestens einen Hinweis (306) auf die erfassten Statussignale (200) auszugeben, wobei eine Position (208) des Hinweises in einer Anzeigefläche (206) der Anzeigeeinheit (104) von der zugeordneten Signalgruppe (204) abhängt, und wobei die Steuerungseinheit (106) dazu ausgebildet ist, die Anzeigeeinheit (104) in Reaktion auf das erfasste Statussignal (200) umzuschalten zwischen einem ersten Zustand (316), in dem kein Hinweis (306) angezeigt wird, und einem zweiten Zustand (318), in dem der mindestens eine Hinweis (306) angezeigt wird; die Vorrichtung ist **dadurch gekennzeichnet, dass** die weiter umfasst:
eine mit der Steuerungseinheit (106) in Signalaustausch stehende Eingabeeinheit (310), die dazu ausgebildet ist, den Zustand (316; 318; 320) der Anzeigeeinheit (104) manuell zu ändern;
wobei die Steuerungseinheit (106) ferner dazu ausgebildet ist, die Anzeigeeinheit (104) in einen dritten Zustand (320) umzuschalten, in dem ein Inhalt des Statussignals in räumlicher Zuordnung zum Hinweis (306) angezeigt wird, wobei die Änderung des Zustands (316; 318; 320) der Anzeigeeinheit (104) von einer dem Statussignal (200) zugeordneten Priorität abhängt,
wobei ein Statussignal (200) mit höchster Priorität automatisch im dritten Zustand (320) angezeigt wird, und
wobei ein Statussignal (200) mit untergeordneter Priorität in der Anzeigefläche (206) im zweiten Zustand (318) angezeigt wird.

2. Vorrichtung nach Anspruch 1, wobei der Hinweis in einer Hinweisfläche (300) innerhalb der Anzeigefläche (206) angezeigt wird, und wobei sich die Hinweisfläche (300) von einem Rand (304) der Anzeigefläche (206) in die Anzeigenfläche (206) erstreckt.

3. Vorrichtung nach Anspruch 2, wobei die von den Signalgruppen (204) abhängigen Positionen (208) die Ränder (304) der Anzeigefläche (206) umfassen, und sich die Hinweisfläche (300) von einem der Signalgruppe (204) entsprechenden Rand (304) der Anzeigefläche (206) in die Anzeigenfläche (206) erstreckt.

4. Vorrichtung nach Anspruch 2 oder 3, wobei die Steuerungseinheit (106) dazu ausgebildet ist, im ersten Zustand (316) nur einen Rand (312) der Hinweisfläche (300) anzuzeigen und/oder beim Übergang in den zweiten Zustand (318) den Rand (312) der Hinweisfläche vom Rand (304) der Anzeigefläche (206) wegzubewegen.

5. Vorrichtung nach einem der Ansprüche 1 bis 4, wobei die Steuerungseinheit (106) dazu ausgebildet ist, einen Betriebszustand des Fahrzeugs (100) und/oder eine Fahrsituation des Fahrzeugs (100) zu erfassen, und wobei die Signalgruppen (204) der Statussignale (200), die Positionen (208) der Hinweise (306) und/oder der Zustand (316; 318; 320) der Anzeigeeinheit (104) vom Betriebszustand des Fahrzeugs (100) und/oder der Fahrsituation des Fahrzeugs (100) abhängig sind.

6. Vorrichtung nach einem der Ansprüche 1 bis 5, wobei die Steuerungseinheit (106) dazu ausgebildet ist, den Zustand (316; 318; 320) der Anzeigeeinheit (104) in Reaktion auf das erfasste Statussignal zu ändern.

7. Vorrichtung nach einem der Ansprüche 1 bis 6, wobei die Änderung des Zustands (316; 318; 320) der Anzeigeeinheit (104) von der dem Statussignal (200) zugeordneten Signalgruppe (204) abhängt.

8. Vorrichtung nach einem der Ansprüche 1 bis 7, wobei die Signalquellen (202) fahrzeugexterne und fahrzeuginterne Signalquellen umfassen.

9. Vorrichtung nach einem der Ansprüche 1 bis 8, wobei zumindest einer der Signalgruppen (204) Statussignale (200) aus unterschiedlichen Signalquellen (202) zugeordnet sind.

10. Vorrichtung gemäß einem der Ansprüche 1 bis 9, wobei die Steuerungseinheit (106) dazu ausgebildet ist, fahrzeugexterne Statussignale über optische Signale und/oder Funksignale zu erfassen.

11. Vorrichtung gemäß einem der Ansprüche 1 bis 10, wobei die Steuerungseinheit (106) dazu ausgebildet ist, fahrzeuginterne Statussignale über ein Bussystem des Fahrzeugs (100) zu erfassen.

12. Kraftfahrzeug (100), insbesondere Nutzfahrzeug, umfassend:
ein Fahrerhaus (102); und
eine Vorrichtung mit einer Anzeigeeinheit (104) und einer Steuerungseinheit (106) gemäß einem der Ansprüche 1 bis 11.

## Claims

1. A device for processing status signals (200) which occur in a vehicle (100), comprising
a display unit (104) which is or can be arranged in a driver's cab (102) of the vehicle (100); a control unit (106) which exchanges or can exchange signals with the display unit (104) and is designed to acquire status signals (200) in the vehicle (100) from different signal sources (202), to assign each status signal (200) to one of a plurality of signal groups (204), and to output at least one message (306) about the acquired status signals (200) on the display unit (104), wherein a position (208) of the message on a display area (206) of the display unit (104) depends on the assigned signal group (204), and wherein the control unit (106) is designed to switch the display unit (104), in reaction to the acquired status signal (200), between a first state (316) in which no message (306) is displayed, and a second state (318) in which the at least one message (306) is displayed; the device is **characterized in that** it also comprises:
an input unit (310) which exchanges signals with the control unit (106) and is designed to change the state (316; 318; 320) of the display unit (104) manually;
wherein the control unit (106) is also designed to switch the display unit (104) into a third state (320) in which the content of the status signal is displayed in a spatial assignment to the message (306), wherein the change in the state (316; 318; 320) of the display unit (104) depends on a priority assigned to the status signal (200) ;
wherein a status signal (200) with the highest priority is displayed automatically in the third state (320), and
wherein a status signal (200) with a subordinate priority is displayed on the display area (206) in the second state (318).

2. The device according to Claim 1, wherein the message is displayed in a message area (300) within the display area (206), and wherein the message area (300) extends into the display area (206) from one edge (304) of the display area (206).

3. The device according to Claim 2, wherein the positions (208) which are dependent on the signal groups (204) comprises the edges (304) of the display area (206), and the display area (300) extends into the display area (206) from an edge (304), corresponding to the signal group (204), of the display area (206).

4. The device according to Claim 2 or 3, wherein the control unit (106) is designed to display, in the first state (316) only one edge (312) of the display area (300) and/or to move the edge (312) of the display area away from the edge (304) of the display area (206) at the changeover into the second state (318).

5. The device according to one of Claims 1 to 4, wherein the control unit (106) is designed to detect an operating state of the vehicle (100) and/or a driving situation of the vehicle (100), and wherein the signal groups (204) of the status signals (200), the positions (208) of the messages (306) and/or the state (316; 318; 320) of the display unit (104) are dependent on the operating state of the vehicle (100) and/or on the driving situation of the vehicle (100).

6. The device according to one of Claims 1 to 5, wherein the control unit (106) is designed to change the state (316; 318; 320) of the display unit (104) in reaction to the acquired status signal.

7. The device according to one of Claims 1 to 6, wherein the change in the state (316; 318; 320) of the display unit (104) depends on the signal group (204) assigned to the status signal (200).

8. The device according to one of Claims 1 to 7, wherein the signal sources (202) comprise vehicle-external and vehicle-internal signal sources.

9. The device according to one of Claims 1 to 8, wherein at least one of the signal groups (204) is assigned status signals (200) from different signal sources (202).

10. The device according to one of Claims 1 to 9, wherein the control unit (106) is designed to acquire vehicle-external status signals by means of optical signals and/or radio signals.

11. The device according to one of Claims 1 to 10, wherein the control unit (106) is designed to acquire vehicle-internal status signals via a bus system of the vehicle (100).

12. A motor vehicle (100), in particular a utility vehicle, comprising:
a driver's cab (102); and
a device having a display unit (104) and a control unit (106) according to one of Claims 1 to 11.

## Revendications

1. Dispositif de traitement de signaux d'état (200) apparaissant dans un véhicule (100), ledit dispositif comprenant :
une unité d'affichage (104) qui est ou peut être disposée dans une cabine de conducteur (102) du véhicule (100) ; une unité de commande (106) qui est ou peut être amenée dans une relation d'échange de signaux avec l'unité d'affichage (104) et qui est conçue pour détecter dans le véhicule (100) des signaux d'état (200) provenant de différentes sources de signaux (202), associer chaque signal d'état (200) à l'un parmi plusieurs groupes de signaux (204) et délivrer à l'unité d'affichage (104) au moins une indication (306) sur les signaux d'état (200) détectés, une position (208) de l'indication dans une zone d'affichage (206) de l'unité d'affichage (104) dépendant du groupe de signaux associé (204), et l'unité de commande (106) étant conçue pour commuter l'unité d'affichage (104), en réponse au signal d'état détecté (200), entre un premier état (316) dans lequel aucune indication (306) n'est affichée et un deuxième état (318) dans lequel l'au moins une indication (306) est affichée ; le dispositif étant **caractérisé en ce qu'**il comprend en outre :
une unité d'entrée (310) qui est dans une relation d'échange de signaux avec l'unité de commande (106) et qui est conçue pour modifier manuellement l'état (316 ; 318 ; 320) de l'unité d'affichage (104) ;
l'unité de commande (106) étant en outre conçue pour commuter l'unité d'affichage (104) dans un troisième état (320) dans lequel un contenu du signal d'état est affiché en association spatiale avec l'indication (306), la modification d'état (316 ; 318 ; 320) de l'unité d'affichage (104) dépendant d'une priorité associée au signal d'état (200),
un signal d'état (200) ayant la priorité la plus élevée étant automatiquement affiché dans le troisième état (320), et
un signal d'état (200) ayant une priorité de niveau inférieur étant affiché dans le deuxième état (318) dans la zone d'affichage (206).

2. Dispositif selon la revendication 1, l'indication étant affichée dans une zone d'indication (300) à l'intérieur de la zone d'affichage (206), et la zone d'indication (300) s'étendant d'un bord (304) de la zone d'affichage (206) jusque dans la zone d'affichage (206) .

3. Dispositif selon la revendication 2, les positions (208) qui dépendent des groupes de signaux (204) comprenant les bords (304) de la zone d'affichage (206), et la zone d'indication (300) s'étendant d'un bord (304) de la zone d'affichage (206), qui correspond au groupe de signaux (204), jusque dans la zone d'affichage (206).

4. Dispositif selon la revendication 2 ou 3, l'unité de commande (106) étant conçue pour afficher uniquement un bord (312) de la zone d'indication (300) dans le premier état (316) et/ou pour écarter, pendant la transition dans le deuxième état (318), le bord (312) de la zone d'indication du bord (304) de la surface d'affichage (206).

5. Dispositif selon l'une des revendications 1 à 4, l'unité de commande (106) étant conçue pour détecter un état de fonctionnement du véhicule (100) et/ou une situation de conduite du véhicule (100), et les groupes de signaux (204) des signaux d'état (200), les positions (208) des indications (306) et/ou l'état (316 ; 318 ; 320) de l'unité d'affichage (104) dépendant de l'état de fonctionnement du véhicule (100) et/ou de la situation de conduite du véhicule (100).

6. Dispositif selon l'une des revendications 1 à 5, l'unité de commande (106) étant conçue pour modifier l'état (316 ; 318 ; 320) de l'unité d'affichage (104) en réponse au signal d'état détecté.

7. Dispositif selon l'une des revendications 1 à 6, la modification d'état (316 ; 318 ; 320) de l'unité d'affichage (104) dépendant du groupe de signaux (204) associé au signal d'état (200).

8. Dispositif selon l'une des revendications 1 à 7, les sources de signal (202) comprenant des sources de signal externes au véhicule et internes au véhicule.

9. Dispositif selon l'une des revendications 1 à 8, l'un au moins des groupes de signaux (204) étant associé à des signaux d'état (200) provenant de différentes sources de signaux (202).

10. Dispositif selon l'une des revendications 1 à 9, l'unité de commande (106) étant conçue pour détecter des signaux d'état externes au véhicule par le biais de signaux optiques et/ou des signaux radio.

11. Dispositif selon l'une des revendications 1 à 10, l'unité de commande (106) étant conçue pour détecter des signaux d'état internes au véhicule par le biais d'un système de bus du véhicule (100).

12. Véhicule automobile (100), en particulier véhicule utilitaire, comprenant :
une cabine de conduite (102) ; et
un dispositif comportant une unité d'affichage (104) et une unité de commande (106) selon l'une des revendications 1 à 11.
